Europäisches Patentamt

(19) European Patent Office

Office européen des brevets

(11) Numéro de publication: **0 200 599**
**B1**

(12) **FASCICULE DE BREVET EUROPEEN**

(45) Date de publication du fascicule du brevet:
**05.09.90**

(21) Numéro de dépôt: **86400665.5**

(22) Date de dépôt: **27.03.86**

(51) Int. Cl.⁵: **G02F 1/133, H01L 21/84**

(54) **Procédé de réalisation d'éléments de commande non linéaire pour écran plat de visualisation électrooptique et écran plat réalisé selon ce procédé.**

(30) Priorité: **02.04.85 FR 8505007**

(43) Date de publication de la demande:
**10.12.86 Bulletin 86/45**

(45) Mention de la délivrance du brevet:
**05.09.90 Bulletin 90/36**

(84) Etats contractants désignés:
**DE GB IT NL**

(56) Documents cités:
**EP-A- 0 070 598**
**EP-A- 0 073 705**
**FR-A- 2 518 788**
**FR-A- 2 548 450**
**FR-A- 2 551 902**

**APPLIED PHYSICS LETTERS,**
**vol. 44, no. 2, 15 janvier 1984, pages 205-206, New York, US; N. SZYDLO et al.: "New amorphous silicon nonlinear element for liquid crystal display addressing"**
**IBM TECHNICAL DISCLOSURE BULLETIN, vol. 22, no. 1, juin 1979, pages 296-298; M.H. BRODSKY et al.: "Large-area dot-matrix liquid-crystal display having diodes deposited on a substrate"**

(73) Titulaire: **THOMSON-CSF, 51, Esplanade du Général de Gaulle, F-92800 Puteaux(FR)**

(72) Inventeur: **Perbet, Jean-Noel, THOMSON-CSF SCPI 19, avenue de Messine, F-75008 Paris(FR)**
Inventeur: **Defrance, Michel, THOMSON-CSF SCPI 19, avenue de Messine, F-75008 Paris(FR)**
Inventeur: **Graclet, Michel, THOMSON-CSF SCPI 19, avenue de Messine, F-75008 Paris(FR)**
Inventeur: **Mourey, Bruno, THOMSON-CSF SCPI 19, avenue de Messine, F-75008 Paris(FR)**
Inventeur: **Szydlo, Nicolas, THOMSON-CSF SCPI 19, avenue de Messine, F-75008 Paris(FR)**
Inventeur: **Truffer, Patrick, THOMSON-CSF SCPI 19, avenue de Messine, F-75008 Paris(FR)**

(74) Mandataire: **Lepercque, Jean et al, THOMSON-CSF SCPI, F-92045 PARIS LA DEFENSE CEDEX 67(FR)**

ACTORUM AG

## Description

L'invention concerne un procédé de réalisation d'éléments de commande non linéaire pour écran plat de visualisation, notamment pour écran de visualisation à cristal liquide, ainsi qu'un écran plat réalisé selon ce procédé.

Le domaine général de l'invention est l'électronique en couche mince sur grande surface. L'application visée par la présente invention est la commande intégrée de chaque point élémentaire d'un écran à cristal liquide.

Comme il est connu, ces écrans comportent généralement un grand nombre de points élémentaires ou éléments d'image de forme carrée ou rectangulaire. Ces éléments d'image peuvent être adressés individuellement. La définition de l'écran est fonction du nombre de points susceptibles de recevoir une information. La commande de chaque point se fait par application d'un champ électrique. Pour la visualisation d'information vidéo, il a été proposé des affichages de type matriciel. Chaque élément d'image est alors défini par l'intersection de deux réseaux de conducteurs orthogonaux appelés lignes et colonnes.

L'adressage d'un élément d'image au moyen de tensions de commande appliquées à la ligne et à la colonne qui le concernent n'a pas besoin d'être maintenu si l'on adopte une technique de multiplexage temporel permettant par récurrence de rafraîchir l'état de l'écran. Cette technique se fonde sur un effet de persistance qui peut être physiologique ou disponible au sein de l'élément de l'écran. Dans le cas de dispositifs d'affichage à cristaux liquides, on peut assimiler un élément d'image à un condensateur dont la constante de temps est suffisante pour maintenir la charge entre deux adressages transitoires successifs.

Dans la présente invention, on met en série avec l'élément image une résistance non linéaire qui est pratiquement isolante endeçà d'un seuil de tension et qui devient de plus en plus conducteur au-delà de ce seuil.

Un tel élément non linéaire peut être en matériau varistance comme cela est décrit dans la demande de brevet français N° 81 16217 déposée le 25 août 1981 au nom de la Demanderesse et publiée sous le N° 2 512 240.

Actuellement, les exigences de la technique en matière d'écrans de visualisation portent, en particulier, sur une meilleure définition de l'image. Dans le cas des écrans du type à affichage matriciel, on est alors amené à concevoir des dispositifs comportant un nombre élevé de lignes ou de colonnes d'adressage. Leurs nombres peut aller jusqu'à 512 ou même 1024. Ceci augmente d'autant les éléments de commutation, donc le nombre de varistances. Pour la fabrication en série, il est nécessaire notamment d'obtenir une bonne reproductibilité et une grande stabilité de ces composants. Il est en outre nécessaire d'adapter, et ce également avec une bonne reproductibilité, la capacité électrique du composant à celle de la cellule associée. Or, les matériaux couramment utilisés, tels que des agglomérats de poudre d'oxyde de zinc, contenant des particules d'oxyde de bismuth et d'oxyde de manganèse ou autre matériau analogue, ne permettent pas de satisfaire entièrement ces exigences. La reproductibilité et la stabilité des varistances dépendent entre autre de la taille de grain et des techniques de passivation des joints de grains mis en oeuvre lors de la fabrication. La capacité parasite de la varistance liée également aux joints de grains est difficilement contrôlable.

D'autres éléments de commutation peuvent être utilisés. Néanmoins, les écrans de visualisation à cristal liquide présentent généralement des défauts d'homogénéité du contraste suivant les éléments d'image, dus à une dispersion des caractéristiques des éléments de commutation qui peut être importante et qui est difficile à éliminer sur de grandes surfaces. Ces défauts peuvent également trouver leur origine, dans une moindre mesure, dans l'épaisseur de la couche de cristal liquide et dans sa couche d'accrochage.

Afin de pallier ces inconvénients, on connaît des dispositifs dans lesquels les éléments non linéaires sont des transistors à films minces principalement à base de silicium amorphe ou de silicium polycristallin. Cependant, ce type de technologie présente quelques difficultés qu'il faut résoudre pour un adressage de haute qualité :

1) meilleur contrôle des caractéristiques qui dépendent des propriétés de deux couches (silicium et isolant) et de leur interface ;
2) une technologie d'auto-alignement est nécessaire pour une meilleure reproductibilité sur grande surface.

D'autres solutions prévoient que les éléments non linéaires sont des éléments dipolaires telle que la structure à base de deux diodes réalisées en série et en opposition.

Ces diodes sont des diodes semiconductrices possédant tous le même point de fonctionnement dans la caractéristique courant-tension. La demande de brevet français N° 83 14542 déposée le 13 septembre 1983 par la Demanderesse et publiée sous le No. 2 551 902 décrit de tels dispositifs réalisés notamment sous forme de diodes Schottky.

Cependant la mise en oeuvre de cette solution nécessite généralement au moins quatre niveaux de masquage.

La présente invention concerne un procédé permettant de réduire à deux le nombre de masquages qui, de plus, ne nécessitent pas une grande précision.

L'invention concerne donc un procédé de réalisation d'éléments de commande non linéaire pour écran de visualisation électrooptique comprenant un matériau électrooptique placé entre une première et une deuxième lame, comportant les phases successives suivantes réalisées sur la deuxième lame (1) :

a) une première phase de dépôt d'une couche d'un matériau semiconducteur amorphe dopé n+ ;
b) une deuxième phase de dépôt d'une couche d'un matériau semiconducteur amorphe non dopé ;

c) une troisième phase de dépôt d'une couche d'un matériau métallique, caractérisé en ce qu'il comporte à la suite de ces phases les autres phases successives suivantes:

d) une quatrième phase de masquage des éléments de commande à réaliser;

e) une cinquième phase de gravure des trois couches précédentes et non masquées de façon à réaliser des structures mésas;

f) une sixième phase de dépôt d'une couche d'un matériau isolant;

g) une septième phase de gravure des portions de la couche de matériau isolant se trouvant à la surface de la couche de matériau métallique;

h) une huitième phase de dépôt d'une couche d'un matériau conducteur;

i) une neuvième phase de gravure d'une part de la couche de matériau conducteur de façon à délimiter des électrodes de l'écran de visualisation et des conducteurs de commande tels que les électrodes sont couplées aux conducteurs de commande par les éléments de commande ainsi réalisés, et d'autre part de la couche de matériel métallique de façon à constituer sur chaque élément de commande, deux grilles métalliques de l'élément de commande.

L'invention concerne également un écran plat de visualisation électrooptique comportant une première et une deuxième lames parallèles enserrant un matériau électrooptique, chaque lame étant munie sur leur face en contact avec le matériau électrooptique, d'électrodes et de conducteur de commande, les électrodes et les conducteurs de commande de la deuxième lame étant couplées entre elles par des éléments de commande non linéaire réalisés selon le procédé et comportant chacun deux diodes en opposition comportant elle-même une couche de semiconducteur amorphe dopé n+, une couche de semiconducteur amorphe non dopé et une couche métallique caractérisé en ce que chaque élément de commande permet de coupler un conducteur de commande à une première et deuxième électrodes par deux couches de semiconducteur amorphe dopé n+ et de semiconducteur amorphe non dopé superposées sur lesquelles sont déposées sur lesquelles ont déposées un premier élément métallique connecté au conducteur de commande, un deuxième élément métallique connecté à la première électrode E1, un troisième élément métallique connecté à la deuxième électrode E2.

Les différents objets et caractéristiques de l'invention seront détaillés dans la description qui va suivre faite à titre d'exemple en se reportant aux figures annexées qui représentent :

- les figures 1 à 9, un exemple de réalisation du procédé de l'invention ;
- la figure 10, une vue en perspective d'un élément de commande réalisé par le procédé selon l'invention ;
- la figure 11, une vue générale d'une matrice de commande réalisée selon l'invention ;
- la figure 12, une vue en coupe de la matrice de commande de la figure 11.

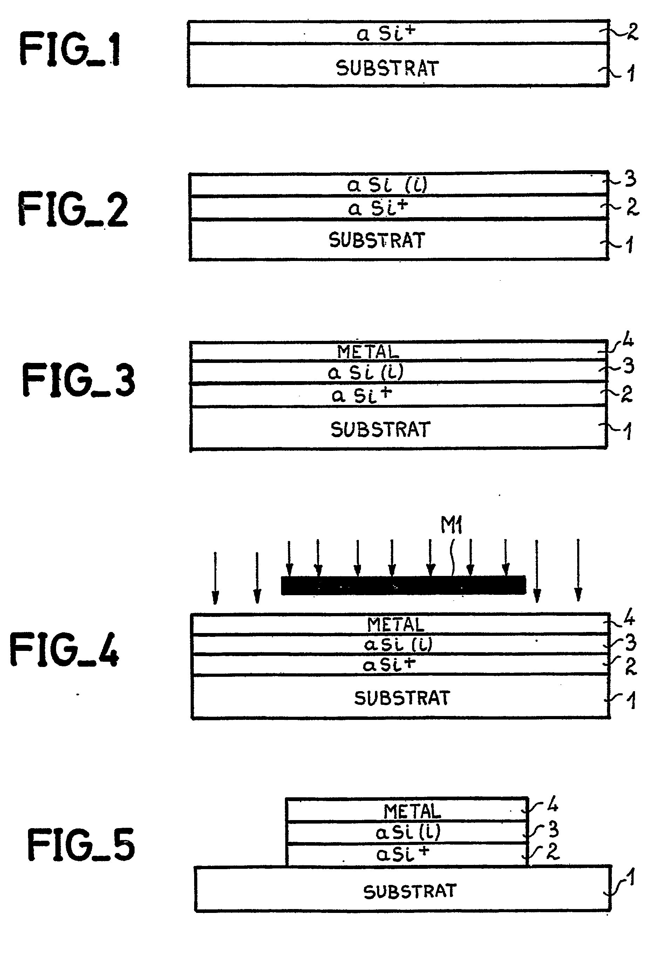

En se reportant aux figures 1 à 9, on va décrire un exemple de réalisation du procédé de l'invention.

Sur un substrat 1 plan réalisé à partir d'un matériau isolant et transparent, telle qu'une plaque de verre, on dépose une couche 2 de silicium amorphe dopé n+ au cours d'une première phase du procédé. Ce dépôt peut se faire soit par dépôt assisté par plasma (Glow-discharge en terminologie anglo-saxonne) à une température d'environ 250 degrés Celsius, soit par épitaxie en phase vapeur (CVD ou Chemical Vapor Deposition) à environ 600 degrés Celsius, soit encore par épitaxie en phase vapeur à pression réduite (LPCVD ou Low Pressure Chemical Vapor Deposition) à environ 550 degrés Celsius. L'épaisseur de la couche 2 réalisée doit être comprise entre 30 et 100 nm. On obtient ainsi une structure telle que représentée en figure 1.

Au cours d'une deuxième phase, on dépose une couche 3 de silicium amorphe non dopé. La méthode de dépôt utilisée peut être l'une des trois méthodes précédentes. Dans le cas de dépôt par épitaxie (CVD ou LPCVD), il conviendra de prévoir une post-hydrogénation pour passiver les défauts des liaisons pendantes, c'est-à-dire combler les liaisons brisées.

L'épaisseur de la couche 3 de silicium amorphe non dopée doit être comprise entre 200 et 600 nm. La pièce obtenue se présente comme représentée en figure 2.

Au cours d'une troisième phase on effectue un dépôt d'une couche de métal 4 tel que du platine, du molybdène ou du palladium par évaporation ou pulvérisation cathodique sous vide. L'épaisseur de cette couche métallique doit être de quelques centaines d'Angstroem d'épaisseur.

Au cours d'une quatrième phase, on réalise par photolithographie une structure mésa dans les trois couches 2, 3 et 4 déposées précédemment. Pour cela, comme représenté en figure 4, on masque la zone correspondant à la structure mésa à réaliser, à l'aide d'un masque M1. On attaque ensuite les couches 2, 3 et 4 par gravure sèche (plasma) ou gravure chimique dans la zone non masquée. On obtient ainsi une structure telle que représentée en figure 5.

Au cours d'une cinquième phase, on effectue un dépôt d'une couche d'une résine photosensible négative 5 telle qu'une couche de polyimide photosensible ayant la propriété de pouvoir se dissoudre, sur les zones non isolées, au développement après insolation.

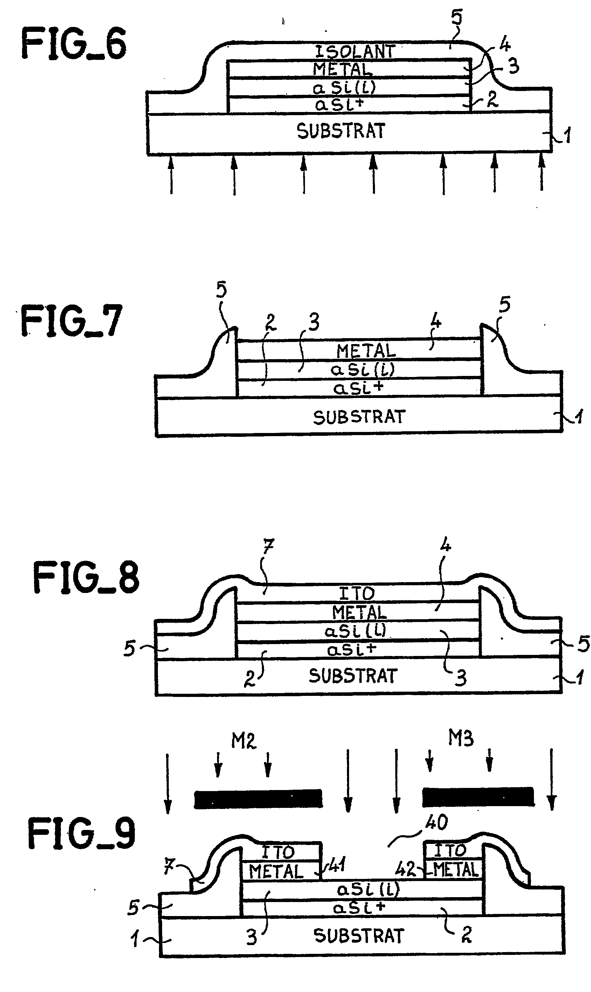

Au cours d'une sixième phase, on insole, à l'aide d'une source lumineuse non représentée, la couche de résine 5, à travers le substrat 1 comme indiqué par les flèches représentées sur la figure 6. Le métal de la couche 4 fait écran pour la résine située sur la couche métallique 4 et joue le rôle de masque de photogravure. Cette résine n'est donc pas insolée et, après développement, elle est dissoute. On obtient ainsi une pièce telle que représentée en figure 7.

Au cours d'une septième phase, on procède au recuit de la couche d'isolant pour la solidifier. La température de recuit dépend de la nature exacte de l'isolant, ce qui est connu dans la technique.

Au cours d'une huitième phase (figure 8), on dépose une couche 7 d'un matériau conducteur qui peut être un matériau transparent dans le cas d'une utilisation de l'élément de commande dans un écran de visualisation fonctionnant en transmission. On pourra ainsi déposer une couche d'oxyde mixte d'étain et indium (ITO) ou un matériau équivalent ($In_2O_3$, $SnO_2$). Une telle couche aura une épaisseur de 10 à 200 nm.

Au cours d'une neuvième phase, comme représenté en figure 9, on masque à l'aide de masques M2 et M3 des surfaces de la couche 7 en matériau conducteur et on effectue une attaque de la couche 7.

La situation des masques M2 et M3 est telle que l'attaque (ou gravure) permette de couper en deux parties la couche 7. De plus, l'attaque permet de graver la couche métallique 4 pour obtenir également deux zones métalliques 41 et 42 distinctes séparées par un espace 40 devenu libre.

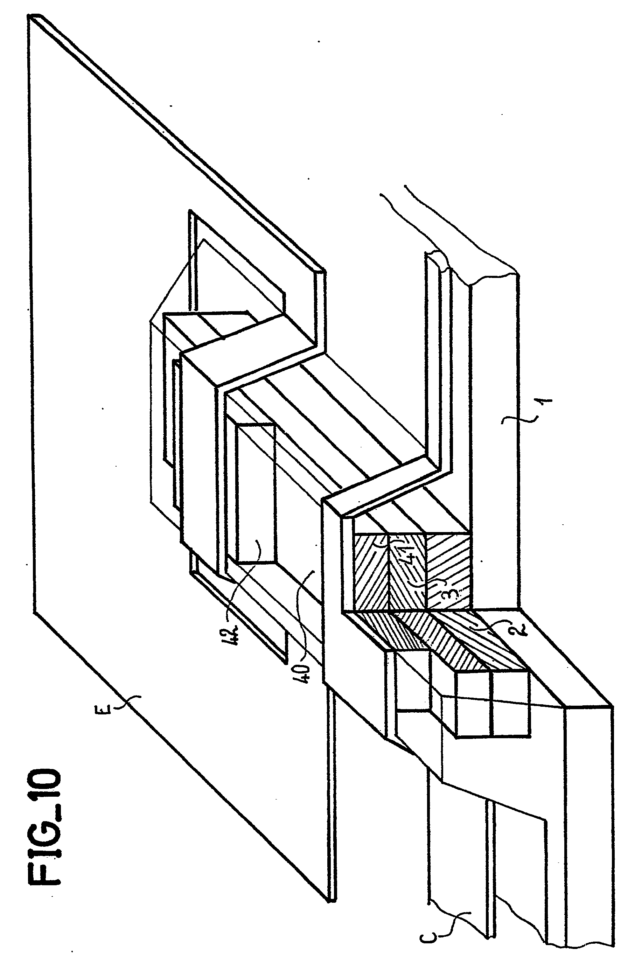

Par ailleurs, les formes des masques M1 et M2 sont telles que l'on réalise à la surface du substrat 1 des électrodes E et des conducteurs de commande C tels que représentés en figure 10. Sur cette figure, on voit qu'un conducteur de commande C est couplé à une électrode E par un élément tel que réalisé précédemment et comprenant successivement une couche métallique 41, une couche de silicium amorphe non dopé 3, une couche de silicium amorphe dopé $n^+$ 2, à nouveau une couche silicium amorphe non dopé 3, et une couche métallique 42. Un élément de commande ainsi décrit constitue deux diodes Schottky montés en série et en opposition.

Le procédé de réalisation de l'invention décrit précédemment permet de réaliser collectivement sur une plaque de substrat un ensemble d'électrodes E, de conducteurs de commande C et d'éléments de commande couplant chaque électrode E à un conducteur de commande C.

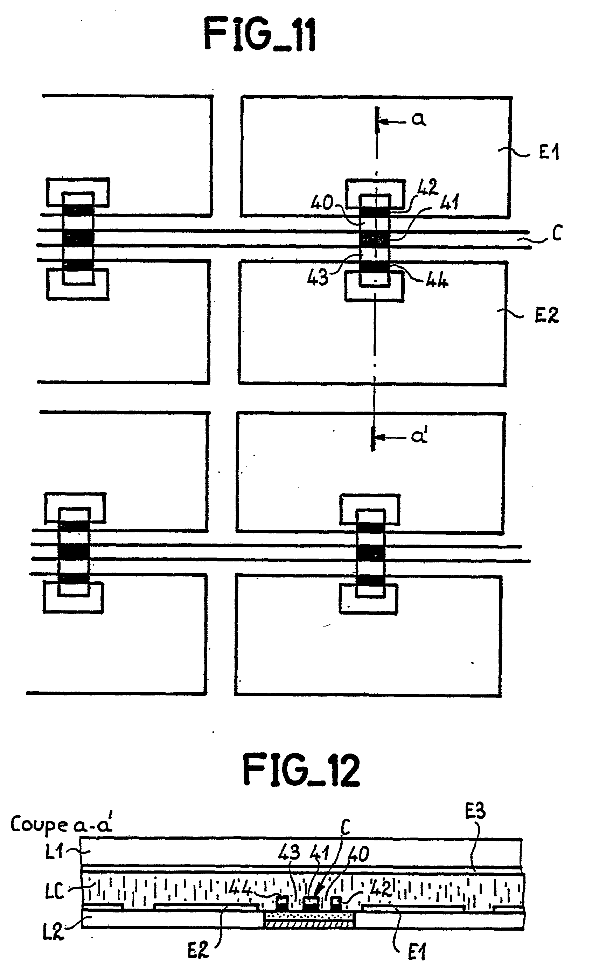

Sur la figure 11, un conducteur de commande C permet de commander deux électrodes E1 et E2 par un élément de commande dont la structure a été dédoublée par rapport à la structure de la figure 10. L'électrode E1 est couplée au conducteur C par deux diodes montées en série et en opposition entre les couches métalliques 41 et 42. L'électrode E2 est couplée au conducteur C par une structure symétrique de la précédente.

Sur la figure 12, on a représenté une cellule à cristal liquide comportant deux lames parallèles L1 et L2 enserrant un cristal liquide LC. La lame L1 porte des électrodes E3. La lame L2 porte un conducteur C couplé à deux électrodes E1 et E2 par un élément constitué de deux diodes montées en série et en opposition entre les couches métalliques 41 et 44.

Selon une variante du procédé de l'invention les troisième et quatrième phases, permettant de réaliser des structures mésas dans les couches 2, 3 et 4, peuvent être exécutée différemment. En effet, elles peuvent être remplacées par la succession d'opérations suivantes : résinage, masquage, dépôt métallique et enlèvement du métal par enlèvement de la résine. Cette façon de procéder permet d'utiliser des métaux dont la gravure directe est difficile, le métal, après gravure, jouant alors le rôle de masque de gravure pour la structure mésa des couches de silicium.

Selon une autre variante du procédé de l'invention au cours de la cinquième phase, on effectue un dépôt d'un isolant inorganique tel que $SiO_2$ ou $Si_3N_4$. Au cours de la sixième phase, on effectue alors une attaque plasma anisotrope de type RIE (Reactive Ion Etching en terminologie anglo-saxonne) qui laisse l'isolant uniquement sur les flancs de la structure mésa.

On voit donc que le procédé de l'invention ne prévoit que deux opérations de masquage ne nécessitant chacune que peu de précision. Ce procédé est donc adapté à la réalisation de structures redondantes et notamment à un structure du type décrite en relation avec les figures 11 et 12.

**Revendications**

1. Procédé de réalisation d'éléments de commande non linéaire pour écran de visualisation électrooptique comprenant un matériau électrooptique placé entre une première et une deuxième lame, comportant les phases successives suivantes réalisées sur la deuxième lame (1):

a) une première phase de dépôt d'une couche (2) d'un matériau semi-conducteur amorphe dopé $n^+$;

b) une deuxième phase de dépôt d'une couche (3) d'un matériau semi-conducteur amorphe non dopé;

c) une troisième phase de dépôt d'une couche (4) d'un matériau métallique;

caractérisé en ce qu'il comporte à la suite de ces phases les autres phases successives suivantes:

d) une quatrième phase de masquage des éléments de commande à réaliser;

e) une cinquième phase de gravure des trois couches précédentes et non masquées de façon à réaliser des structures mésas;

f) une sixième phase de dépôt d'une couche d'un matériau isolant (5);

g) une septième phase de gravure des portions de la couche de matériau isolant se trouvant à la surface de la couche (4) de matériau métallique;

h) une huitième phase de dépôt d'une couche (7) d'un matériau conducteur;

i) une neuvième phase de gravure d'une part de la couche de matériau conducteur (7) de façon à délimiter des électrodes (E) de l'écran de visualisation et des conducteurs de commande (C) tels que les électrodes sont couplées aux conducteurs de commande par les éléments de commande ainsi réalisés, et d'autre part de la couche de matériau métallique (4) de façon à constituer sur chaque élément de commande, deux grilles métalliques de l'élément de commande.

2. Procédé de réalisation selon la revendication 1, dans lequel la deuxième lame (1) au moins est transparente, caractérisé en ce que la couche de matériau isolant (5) est une résine négative et que la septième phase d'usinage de cette couche de matériau isolant consiste principalement en une isolation par un faisceau lumineux dirigé à travers ladite deuxième lame (1) de telle façon que le matériau isolant se trouvant à la surface de la couche (4) de matériau métallique ne soit pas isolée et que seul ce matériau soit retiré par un lavage de la couche de matériau isolant.

3. Procédé selon la revendication 1, caractérisé en ce que le matériau (5) déposé au cours de la sixième phase est un matériau isolant inorganique et qu'au cours de la septième phase on procède à l'enlèvement de ce matériau, sauf sur les flancs des structures mésas, par attaque plasma anisotrope.

4. Ecran plat de visualisation électrooptique comportant une première et une deuxième lame parallèles (L1, L2) enserrant un matériau électrooptique, chaque lame étant munie sur leur face en contact avec le matériau électrooptique, d'électrodes et des conducteurs de commande, les électrodes (E1 et E2) et les conducteurs de commande (C) de la deuxième lame étant couplées entre elles par des éléments de commande non linéaire réalisés selon le procédé des revendications 1 à 3, et comportant chacun deux diodes en série et en opposition comportant elle-même une couche (2) de semiconducteur amorphe dopé n+, une couche de semiconducteur amorphe non dopé (3) et une couche métallique (4), caractérisé en ce que chaque élément de commande permet de coupler un conducteur de commande (C) à une première et deuxième électrodes (E1, E2) par deux couches de semiconducteur amorphe dopé n+ (2) et de semiconducteur amorphe non dopé (3) superposées sur lesquelles sont déposées un premier élément métallique (41) connecté au conducteur de commande (C), un deuxième élément métallique (42) connecté à la première électrode (E1), et un troisième élément métallique (44) connecté à la deuxième électrode (E2).

**Claims**

1. A method for the manufacture of non-linear control elements for an electrooptic viewing screen comprising an electrooptic material placed between a first and second sheet, comprising the following successive phases performed on the second sheet (1):
   (a) a first phase of deposition of a layer (2) of an amorphous n+ doped semiconductor material;
   (b) a second phase of deposition of a layer (3) of an non-doped amorphous semiconductor material; and
   (c) a third phase of deposition of a layer (4) of a metallic material;
characterized in that it comprises, after these phases, the following successive further phases:
   (d) a fourth phase of masking the control elements to be produced;
   (e) a fifth phase of etching the three preceding unmasked layers in such a manner as to produce mesa structures;
   (f) a sixth phase of deposition of a layer of an insulating material (5);
   (g) a seventh phase of etching the parts of the layer on insulating material located on the surface of the layer (4) of metallic material;
   (h) an eighth phase of deposition of a layer (7) of a conductive material; and
   (i) a ninth phase of etching on the one hand the layer of conductive material (7) in such a manner as to delimit viewing screen electrodes (E) and control conductors (C) such that the electrodes are coupled with the control conductors by the control elements, and on the other hand the layer of metallic material (4) in such a manner as to constitute two metallic control element grids on each control element.

2. The method of manufacture as claimed in claim 1, wherein the second sheet (1) at least is transparent, characterized in that the layer of insulating material (5) is a negative resin and in that the seventh phase of treating this layer of insulating material consists principally in insulating same using a light beam directed through the said second sheet (1) in such a manner that the insulating material located at the surface of the layer (4) of metallic material is not insulated and in that this material is removed by washing of the layer of insulating material.

3. The method as claimed in claim 1, characterized in that the material (5) deposited during the course of the sixth phase is an inorganic insulating material and in that during the course of the seventh phase this material is removed, save on the sides of the mesa structures, by an anisotropic plasma attack.

4. A flat electrooptic viewing screen comprising first and second parallel sheets (L1 and L2) enclosing an electrooptic material, each sheet being provided on its face in contact with the electrooptic material with electrodes and control conductors, the electrodes (E1 and E2) and the control conductors (C) of the second sheet being coupled with each other by non-linear control elements produced in the method as claimed in the preceding claims 1 through 3 and each comprising two diodes in series and opposed to each other, same comprising a layer (2) amorphous n+ doped semiconductor, a non-doped layer of amorphous semiconductor (3) and metallic layer (4), characterized in that each control element makes it possible to couple one control conductor (C) with first and second electrodes (E1 and E2) by two layers of n+ doped amorphous semiconductor (2) and of non-doped amorphous semiconductor (3) which are superposed and on which there are disposed a first metallic element (41) connected with the control conductor (C), a second metallic element (42) connected with the first electrode (E1) and a third metallic element (44) connected to the second electrode (E2).

**Patentansprüche**

1. Verfahren zur Verwirklichung von nichtlinearen Steuerelementen für einen elektrooptischen Bildschirm, mit einem zwischen einem ersten Plättchen und einem zweiten Plättchen angeordneten elektrooptischen Material, enthaltend die folgenden, auf dem zweiten Plättchen (1) verwirklichten aufeinanderfolgenden Phasen:
   a) eine erste Phase des Niederschlags einer Schicht (2) aus einem n+-dotierten, amorphen Halbleitermaterial;
   b) eine zweite Phase des Niederschlags einer Schicht (3) aus einem nicht dotierten, amorphen Halbleitermaterial;

c) eine dritte Phase des Niederschlags einer Schicht (4) eines metallischen Materials;

dadurch gekennzeichnet, daß es nach diesen Phasen die folgenden weiteren aufeinanderfolgenden Phasen enthält:

d) eine vierte Phase der Maskierung der zu verwirklichenden Steuerelemente;

e) eine fünfte Phase des Ätzens der drei vorhergehenden und nicht maskierten Schichten, um so Mesastrukturen zu verwirklichen;

f) eine sechste Phase des Niederschlags einer Schicht aus einem isolierenden Material (5);

g) eine siebte Phase des Ätzens der auf der Oberfläche der Schicht (4) aus metallischem Material sich befindenden Bereiche der Schicht aus isolierendem Material;

h) eine achte Phase des Niederschlags einer Schicht (7) aus leitendem Material;

i) eine neunte Phase des Ätzens einerseits der Schicht aus leitendem Material (7), um so Elektroden (E) des Bildschirms und Steuerleitungen (C) derart abzugrenzen, daß die Elektroden mit den Steuerleitungen durch die auf diese Weise verwirklichten Steuerelemente gekoppelt sind, und andererseits der Schicht aus metallischem Material (4), um so auf jedem Steuerelement zwei Metallgitter des Steuerelementes aufzubauen.

2. Verwirklichungsverfahren gemäß Anspruch 1, in dem wenigstens das zweite Plättchen (1) durchsichtig ist, dadurch gekennzeichnet, daß die Schicht aus isolierendem Material (5) ein Negativharz ist und daß die siebte Phase der Bearbeitung dieser Schicht aus isolierendem Material hauptsächlich aus einer Bestrahlung mittels eines durch das zweite Plättchen (1) gelenkten Lichtstrahls besteht, derart, daß das auf der Oberfläche der Schicht (4) aus metallischem Material sich befindende isolierende Material nicht bestrahlt wird und daß nur dieses Material durch ein Abwaschen der Schicht aus isolierendem Material abgenommen wird.

3. Verfahren gemäß Anspruch 1, dadurch gekennzeichnet, daß das im Verlauf der sechsten Phase niedergeschlagene Material (5) ein anorganisches Isoliermaterial ist und daß im Verlauf der siebten Phase mit einem Abheben dieses Materials ausgenommen an den Seiten der Mesastrukturen mittels eines Eingriffs mit anisotropen Plasma vorangeschritten wird.

4. Elektrooptischer Flachbildschirm mit einem ersten und einem dazu parallelen zweiten Plättchen (L1, L2), die ein elektrooptisches Material einschließen, wobei jedes Plättchen auf seiner mit dem elektrooptischen Material in Kontakt befindlichen Seite mit Elektroden und Steuerleitungen versehen ist, wobei die Elektroden (E1 und E2) und die Steuerleitungen (C) des zweiten Plättchens durch die nichtlinearen Steuerelemente miteinander gekoppelt sind, die gemäß dem Verfahren der Ansprüche 1 bis 3 verwirklicht sind und jeweils zwei in Reihe geschaltete und einander gegenüberliegende Dioden enthalten, die ihrerseits eine Schicht (2) eines amorphen, n+-dotierten Halbleiters, eine Schicht (3) eines amorphen, nichtdotierten Halbleiters und eine metallische Schicht (4) enthalten, dadurch gekennzeichnet, daß jedes Steuerelement mittels zweier Schichten eines amorphen n+-dotierten Halbleiters (2) und eines amorphen, nichtdotierten Halbleiters (3), auf denen ein erstes mit der Steuerleitung (C) verbundenes metallisches Element (41), ein mit der ersten Elektrode (E1) verbundenes zweites metallisches Element (42) und ein mit der zweiten Elektrode (E2) verbundenes drittes metallisches Element (44) abgelagert sind, die Kopplung der Steuerleitung (C) an eine erste und eine zweite Elektrode (E1, E2) erlaubt.

EP 0 200 599 B1

**FIG_1**

| $a\ Si^+$ | 2 |
| SUBSTRAT | 1 |

**FIG_2**

| $a\ Si\ (i)$ | 3 |
| $a\ Si^+$ | 2 |
| SUBSTRAT | 1 |

**FIG_3**

| METAL | 4 |
| $a\ Si\ (i)$ | 3 |
| $a\ Si^+$ | 2 |
| SUBSTRAT | 1 |

**FIG_4**

M1

| METAL | 4 |
| $a\ Si\ (i)$ | 3 |
| $a\ Si^+$ | 2 |
| SUBSTRAT | 1 |

**FIG_5**

| METAL | 4 |
| $a\ Si\ (i)$ | 3 |
| $a\ Si^+$ | 2 |
| SUBSTRAT | 1 |

**FIG_6**

ISOLANT — 5, 4
METAL — 3
a Si (L)
a Si+ — 2
SUBSTRAT — 1

**FIG_7**

5
2   3                    4        5
METAL
a Si (L)
a Si+
SUBSTRAT — 1

**FIG_8**

7                    4
ITO
METAL
a Si (L)
5                          5
a Si+
2   SUBSTRAT   3   1

**FIG_9**

M2                    M3
40
7   ITO   41   42   ITO
METAL              METAL
5   a Si (L)
1   a Si+
3   SUBSTRAT   2

FIG_10

# FIG_11

E1

a

40  42  41

C

43  44

E2

a'

# FIG_12

Coupe a-a'

E3

L1

43 41 40

C

LC

44

42

L2

E2

E1